# EUROPÄISCHE PATENTANMELDUNG

(11) **EP 4 711 643 A1**
(43) Veröffentlichungstag der Anmeldung: **18.03.2026**
(21) Anmeldenummer: 25197039.8
(22) Anmeldetag: 20.08.2025
(51) Int. Cl.: F16H 55/14, F16H 55/17

(54) **ZAHNRAD UND GETRIEBE MIT ZAHNRAD**

(30) Priorität: 17.09.2024 DE 102024208839
(71) Anmelder: Siemens Mobility GmbH, 80997 München (DE); Siemens Traction Gears GmbH, 09322 Penig (DE)
(72) Erfinder: Hensl, Thomas, 09322 Penig (DE); Rieder, Georg, 90765 Fürth (DE)
(74) Vertreter: Siemens Patent Attorneys

(57) **Zusammenfassung**

Die Erfindung betrifft ein Zahnrad 1 für ein Getriebe sowie ein Getriebe mit wenigstens einem solchen Zahnrad 1, wobei das Zahnrad 1 einen äußeren Kranz 5 mit einer Verzahnung 7 mit einer Vielzahl von Zähnen 8, wenigstens einen inneren Kranz 10 und einen Steg 12, mittels dessen der äußere Kranz 5 mit dem wenigstens einen inneren Kranz 10 verbunden ist, aufweist, wobei der Steg 12 zwei gegenüberliegende Seiten 13, 14 und wenigstens ein Zusatzgewicht 20, 22 aufweist, welches das Bedämpfen von Biegeschwingungen des Zahnrads 1 und somit eine Reduktion der damit verbundenen Geräuschentwicklung ermöglicht.

## Beschreibung

Bei bzw. an Getrieben, insbesondere großen Getrieben, beispielsweise von Antrieben von Fahrzeugen, insbesondere Schienenfahrzeugen, kommt es häufig zu Geräuschentwicklungen durch Schwingungen eines oder mehrerer Zahnräder, insbesondere eines, als Großrad bezeichneten, großen Zahnrads eines großen Getriebes, beispielsweise Stirnradgetriebes etc. Große Getriebe besitzen mindestens ein großes Zahnrad. Aufgrund von ständig steigenden Anforderungen hin zu kleineren Bauräumen und/oder geringeren Gewichten und Kosten von Fahrzeuggetrieben werden die darin befindlichen Zahnräder, insbesondere solche großen Zahnräder, in immer schmaleren Bauformen ausgeführt bzw. gebaut. Insbesondere große, schlanke Radkörper können infolge der sogenannten Drehwegabweichung zu Schwingungen angeregt werden. Dies führt bei solchen Radkörpern, insbesondere mit Getrieben mit solchen Großrädern, neben üblichen Torsionsschwingungen verstärkt zu zusätzlichen Biegeschwingungen, die an das Gehäuse übertragen werden und als hörbares Geräusch wahrzunehmen sind. Während Torsionsschwingungen üblicherweise unmittelbar durch dämpfende Kupplungselemente reduziert werden, wird bei den Biegeschwingungen bisher versucht, den Geräuschentwicklungen, die durch die Biegeschwingungen entstehen, durch hinreichend massive Gehäusestrukturen, beispielsweise durch Gehäusewandungen mit hoher Masse etc., entgegenzuwirken.

Aus der DE 102019211451 A1 ist ein Stegzahnrad bekannt, bei dem durch eine, an einer der Verzahnung gegenüberliegenden Seite des Kranzes des Zahnrads, periodische Variation der Geometrie, ein niedriges Gewicht bei gleichzeitiger, vergleichsweise höherer Belastung beibehalten wird.

Der Erfindung liegt die Aufgabe zugrunde, ein verbessertes Zahnrad mit reduzierten Biegeschwingungen, ein Getriebe mit einem solchen Zahnrad sowie einen Antrieb mit einem solchen Getriebe anzugeben.

Gelöst wird die Aufgabe durch die Merkmale des unabhängigen Patentanspruchs 1 sowie der nebengeordneten Patentansprüche. Weiterbildungen und Ausgestaltungen der Erfindung finden sich in den Merkmalen der abhängigen Patentansprüche wieder.

Dazu weist das erfindungsgemäße Zahnrad einen Steg auf, wobei der Steg wenigstens ein Zusatzgewicht aufweist.

Die erfindungsgemäße Lösung hat den Vorteil, dass mittels eines Zusatzgewichts bzw. mehrerer Zusatzgewichte, beispielsweise einem oder mehrerer Blechpakete oder Blechringpaket(e) etc., die Biegeschwingungen durch reibungsbehaftete Relativbewegungen der Zusatzgewichte, signifikant bedämpft werden können. Gleichzeitig können entstehende Biegeschwingungen durch die zusätzliche Masse der Zusatzgewichte, z.B. der Blechpakete etc., mit denen der Stegbereich des Zahnrads, beispielsweise Großrads, gezielt verstärkt werden kann, in unkritische Geschwindigkeitsbereiche des betreffenden Fahrzeugs verschoben werden. Somit wird eine daraus resultierende Geräuschentwicklung ebenfalls entsprechend reduziert bzw. größtmöglich vermieden.

Nach einer bevorzugten Ausführungsform der Erfindung ist der Steg auf beiden Seiten mit wenigstens einem Zusatzgewicht verbunden. Auf diese Weise können Unwuchten bei der Verstärkung des Stegs auf sehr einfache Weise nahezu vollständig vermieden werden.

Nach einer weiteren Ausführungsform der Erfindung ist das Zusatzgewicht mehrteilig ausgeführt. Bevorzugt besteht das Zusatzgewicht aus gestapelten Elementen. Besonders bevorzugt sind die gestapelten Elemente ringförmige Elemente oder Einzelsegmente.

Durch die Mehrteiligkeit des bzw. der Zusatzgewichte lässt sich das zur Reduzierung von Biegeschwingungen bestmögliche Gewicht und/oder dessen bestmögliche Form besonders fein justieren und somit mit größtmöglicher Wirkung aufeinander abstimmen. Dies ist besonders einfach mit gestapelten Elementen möglich. Ringförmige Elemente lassen sich dabei besonders einfach an den vorgesehenen Stegbereich anpassen bzw. vollständig mit dem Stegbereich verbinden. Hierzu sind beispielsweise Blechpakete aus ringförmigen Einzelsegmenten aufgrund der guten Formbarkeit und hohen Verfügbarkeit besonders vorteilhaft. Hier können selbstverständlich alle möglichen, sinnvollen und geeigneten Formen und Materialien eingesetzt bzw. verwendet werden.

Nach einer weiteren bevorzugten Ausführungsform der Erfindung sind der Steg und das wenigstens eine Zusatzgewicht mit wenigstens einem Befestigungsmittel miteinander verbunden. Besonders bevorzugt ist das Befestigungsmittel ein Niet.

Dadurch lässt sich das Zusatzgewicht bzw. lassen sich die Zusatzgewichte besonders einfach mit dem Steg des Zahnrads verbinden bzw. am Steg fixieren. und behalten somit deren bevorzugte bzw. bestmögliche Position bei. Je nach Anforderung ist ein Befestigungsmittel für eine lösbare Verbindung, beispielsweise mittels Schrauben etc., oder auch eine unlösbare Verbindung, beispielsweise mittels Verschweißens, Verlötens etc., verwendbar. Für eine unlösbare und somit dauerhafte Verbindung ist eine Nietverbindung besonders vorteilhaft, da, insbesondere bei einer Befestigung von Zusatzgewichten auf beiden Seiten des Stegs, die jeweiligen Nieten durch die Zusatzgewichte und den Steg hindurchgehen und somit eine formschlüssige Verbindung der Zusatzgewichte und dem Steg des Zahnrades miteinander erreicht wird, wodurch eine besonders stabile und sichere, dauerhafte Verbindung gewährleistet ist. Je nach Anforderung und Gegebenheiten können hierfür eine unterschiedliche Anzahl von Nieten eingesetzt werden.

Nach einer weiteren bevorzugten Ausführungsform der Erfindung weist das wenigstens eine Zusatzgewicht auf beiden Seiten des Stegs jeweils unterschiedliches Gewicht auf. Dadurch können insbesondere Ungleichgewichte eines Zahnrades, die beispielsweise bei der Herstellung entstanden sind, auf einfache Weise durch unterschiedlich dicke Zusatzgewichte, beispielsweise Blechpakete etc., ausgeglichen werden.

Ein weiterer Aspekt der vorliegenden Erfindung betrifft ein Getriebe mit wenigstens einem Zahnrad nach einem der Ansprüche 1 bis 8.

Ein weiterer Aspekt der vorliegenden Erfindung betrifft einen Antrieb mit wenigstens einem Getriebe nach Anspruch 9.

Die vorher beschriebenen Ausprägungen der Erfindung und insbesondere deren Vorteile sind sowohl auf das genannte Getriebe als auch auf den genannten Antrieb sinngemäß übertragbar und gelten demzufolge insoweit auch hierfür.

Im Weiteren werden bevorzugte Ausführungsbeispiele der Erfindung mit Bezugnahme auf die Zeichnung näher erläutert. Es zeigt:

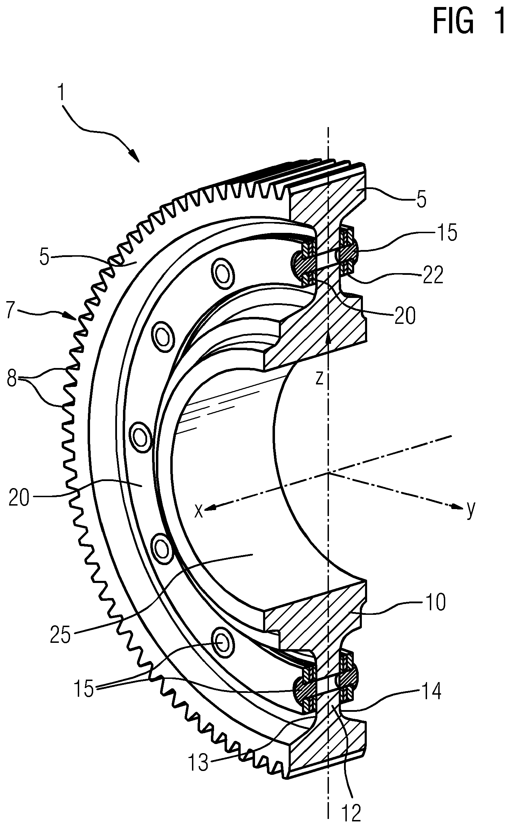

Fig. 1 einen schematischen Halbschnitt einer Ausführungsform eines erfindungsgemäßen Zahnrads.

Figur 1 zeigt einen schematischen Halbschnitt einer Ausführungsform eines erfindungsgemäßen Zahnrads 1. Dabei dient das Koordinatensystem mit den rechtwinklig zueinander angeordneten Achsen x, y und z lediglich zur räumlichen Orientierung und ist nicht Teil des erfindungsgemäßen Zahnrads 1.

Das Zahnrad 1 weist einen äußeren 5 und einen inneren 10 Kranz, der als Radnabe ausgeführt ist, auf, die mittels eines Steges 12 miteinander verbunden sind. Der Steg 12 ist dabei in x-Richtung gesehen deutlich schmaler als der innere Kranz bzw. die Radnabe 10 und der äußere Zahnkranz 5. Der innere Kranz 10 umschließt eine, bezüglich der Achse x bzw. um die Achse x gebildete Durchführung 25, die im Wesentlichen die Form eines geraden Kreis-Hohlzylinders hat. Der Masseschwerpunkt des Zahnrades 1 und somit auch der der Durchführung 25 liegt im Koordinatenschwerpunkt, also im Kreuzungspunkt der Achsen x, y und z. Das Zahnrad 1 ist bezüglich der Durchführung 25 ebenfalls kreisförmig, wobei gemäß Figur 1 aus Darstellungsgründen lediglich eine Hälfte des Zahnrads 1 dargestellt ist. Die in der Figur 1 nicht dargestellte zweite Hälfte des Zahnrads 1 ist entsprechend spiegelbildlich identisch zur gezeigten Hälfte ausgeführt. Durch die Durchführung 25 wird üblicherweise eine Welle, insbesondere Radsatzwelle etc., durchgeführt, auf der das Zahnrad 1 drehfest angebunden, beispielsweise angeflanscht, aufgepresst, aufgeschrumpft etc., wird.

Dabei entspricht der grundsätzliche Aufbau des dargestellten Zahnrads 1 bezüglich der Form des äußeren Kranzes 5, der auf der Außenseite eine Verzahnung 7 mit einer Vielzahl von Zähnen 8 aufweist, der Form des hier zweifach abgestuften, inneren Kranzes 10 sowie der Form des Stegs 12, der den äußeren 5 und den inneren Kranz 10 fugenlos miteinander verbindet, wobei der Steg 12 in der y-z-Ebene liegend zwei gegenüberliegende Seiten 13 und 14 aufweist und wobei der Steg 12 selbst, außer an den unmittelbaren Übergängen zu den Kränzen 5, 10, eine deutlich geringere Ausdehnung in x-Richtung aufweist, als die beiden mittels des Stegs 12 miteinander verbunden Kränze 5, 10, einem üblicherweise verwendeten Aufbau eines bekannten Zahnrads.

Erfindungsgemäß weist das Zahnrad 1 vorliegend zwei ringförmige Zusatzgewichte 20, 22 auf, die in der y-z-Ebene senkrecht zur x-Achse zwischen dem äußeren 5 und inneren 10 Kranz an den Seiten 13 und 14 des Stegs 12 mit dem Steg 12 verbunden bzw. am Steg 12 angebracht sind. Beide ringförmigen Zusatzgewichte 20, 22 bestehen aus einzelnen aufeinander gestapelten Elementen, vorliegend hier Blechringen, die zu je einem Blechpaket 20, 22 mit aufeinandergestapelten Ringelementen zusammengefügt sind. Durch die Stapelung mehrerer, einzelner Elemente, hier Blechringe, die beispielsweise unterschiedliche Dicken aufweisen können, ist eine überaus genaue Feinjustierung des Gewichts der Blechpakete 20, 22 möglich. Dadurch können die, zur Reduzierung von Biegeschwingungen des Zahnrads 1 erforderlichen Blechpakete 20, 22 exakt zusammengestellt und an den Seiten 13 (Zusatzgewicht bzw. Blechpaket 20) und 14 (Zusatzgewicht bzw. Blechpaket 22) des Stegs 12 angebracht werden, so dass die Entstehung von Biegeschwingungen des Zahnrads 1 während des Betriebs signifikant reduziert bzw. entstehende bzw. entstandene Biegeschwingungen bedämpft werden und somit eine daraus resultierende Geräuschentwicklung ebenfalls entsprechend reduziert bzw. größtmöglich vermieden wird. Unabhängig davon können selbstverständlich auch singuläre, einteilige Zusatzgewichte oder auch mehrere Einzelringsegmente als Zusatzgewichte verwendet werden. Hier sind auch alle möglichen weiteren, sinnvollen Varianten denkbar und von der Erfindung mitumfasst. Durch die Aufteilung der Zusatzgewichte 20 bzw. 22 auf die beiden gegenüberliegenden Seiten des Stegs 12 und somit des Zahnrads 1 können die beiden Zusatzgewichte 20, 22 nicht nur dasselbe Gewicht, sondern, falls erforderlich, auch unterschiedliche Gewichte aufweisen, um an die vorliegenden Gegebenheiten bzw. Anforderungen exakt angepasst werden zu können und das Ergebnis hinsichtlich der Vermeidung der Geräuschentwicklung weiter zu optimieren.

Eine möglichst einfache und effektive Verbindung der Blechpakete 20, 22 miteinander und zusammen mit dem Steg 12 wird vorliegend durch entsprechende Befestigungsmittel 15, hier Nieten, erreicht. Dazu werden mehrere Nietverbindungen mit Nieten 15 realisiert, die durch das Blechpaket 20 den Steg 12 und das Blechpaket 22 hindurchgeführt sind und auf jeder Seite von einem zugehörigen Nietkopf abgeschlossen werden und somit eine besonders stabile, sichere und dauerhafte Verbindung gewährleisten. Die vorliegende Ausführungsform weist bezüglich des gesamten Zahnrads 1 insgesamt 12 Nietverbindungen auf. Die Erfindung ist jedoch in keiner Weise hierauf beschränkt. So ist selbstverständlich eine beliebige, sowohl eine kleinere als auch eine größere Anzahl von Verbindungen, insbesondere Nietverbindungen etc., von der Erfindung mitumfasst, Darüber hinaus sind alle möglichen weiteren, sinnvollen Befestigungsmittel 15, beispielsweise Schrauben etc., je nach Anforderung ebenfalls mit umfasst.

Ein solches erfindungsgemäßes Zahnrad 1 kann beispielsweise auf bzw. bei jeglichen Wellen, insbesondere Radsatzwellen etc., von Getrieben, Antrieben etc., jeglicher Art vorteilhafterweise verwendet bzw. eingebaut werden.

Die Erfindung ist darüber hinaus in keiner Weise auf die, in der Figur 1 beschriebenen und gezeigten Ausführungsformen beschränkt. Vielmehr sind auch alle möglichen weiteren, sinnvollen Ausführungsformen der Erfindung vollumfänglich mit umfasst.

## Patentansprüche

1. Zahnrad (1) für ein Getriebe, mit einem äußeren Kranz (5), wobei der äußere Kranz (5) eine Verzahnung (7) mit einer Vielzahl von Zähnen (8) aufweist, wenigstens einem inneren Kranz (10) und einem Steg (12), mittels dessen der äußere Kranz (5) mit dem wenigstens einen inneren Kranz (10) verbunden ist, wobei der Steg (12) zwei gegenüberliegende Seiten (13, 14) aufweist,
**dadurch gekennzeichnet, dass**
der Steg (12) wenigstens ein Zusatzgewicht (20, 22) aufweist.

2. Zahnrad (1) nach Anspruch 1,
**dadurch gekennzeichnet, dass**
der Steg (12) auf beiden Seiten (13, 14) mit wenigstens einem Zusatzgewicht (20, 22) verbunden ist.

3. Zahnrad (1) nach Anspruch 1 oder 2,
**dadurch gekennzeichnet, dass**
das Zusatzgewicht (20, 22) mehrteilig ausgeführt ist.

4. Zahnrad (1) nach einem der vorherigen Ansprüche,
**dadurch gekennzeichnet, dass**
das Zusatzgewicht (20, 22) aus gestapelten Elementen besteht.

5. Zahnrad (1) nach Anspruch 4,
**dadurch gekennzeichnet, dass**
die gestapelten Elemente ringförmige Elemente oder Einzelsegmente sind.

6. Zahnrad (1) nach einem der vorherigen Ansprüche,
**dadurch gekennzeichnet, dass**
der Steg (12) und das wenigstens eine Zusatzgewicht (20, 22) mit wenigstens einem Befestigungsmittel (15) miteinander verbunden sind.

7. Zahnrad (1) nach Anspruch 6,
**dadurch gekennzeichnet, dass**
das Befestigungsmittel (15) ein Niet ist.

8. Zahnrad (1) nach einem der vorherigen Ansprüche,
**dadurch gekennzeichnet, dass**
das wenigstens eine Zusatzgewicht (20, 22) auf beiden Seiten (13, 14) des Stegs (12) jeweils unterschiedliches Gewicht aufweist.

9. Getriebe mit wenigstens einem Zahnrad (1) nach einem der Ansprüche 1 bis 8.

10. Antrieb mit wenigstens einem Getriebe nach Anspruch 9.
